# FASCICULE DE BREVET EUROPEEN

(11) **EP 0 966 583 B1**
(45) Date de publication et mention de la délivrance du brevet: **11.02.2004**
(21) Numéro de dépôt: 98914914.1
(22) Date de dépôt: 13.03.1998
(51) Int. Cl.: E04F 21/02

(54) **Outil pour la préparation de produits visqueux**
Werkzeug zum Zubereiten von zähflüssigen Produkten
Tool for preparing viscous products

(30) Priorité: 14.03.1997 FR 9703065
(43) Date de publication de la demande: 29.12.1999
(73) Titulaire: Glavce, Ariadna Ioana, 06200 Nice (FR)
(72) Inventeur: Glavce, Ariadna Ioana, 06200 Nice (FR)
(86) Numéro de dépôt international: PCT/FR1998/000514
(87) Numéro de publication internationale: WO 1998/041711

(56) Documents cités:
- FR-A- 2 619 405

## Description

L'objet de la présente invention concerne un récipient élastique à poignée permettant, la préparation et la manipulation de produits liquides ou visqueux comme par exemple indicatif et non limitatif; mortier, ciment, plâtre, enduit, peinture, etc. d'une part et d'autre part, un nettoyage facile, grâce à la possibilité de déformer le récipient sans l'abîmer, après son utilisation.

Aujourd'hui, pour préparer le mortier, le plâtre, les enduits, etc., nécessaires aux petites réparations telles le rebouchage de tranchées destinées au passage de tuyauteries sanitaires ou électriques, la réparation de fissures dans les murs, ou en général les diverses réparations d'entretien courant dans la maison, etc., on connaît les auges, les petits bols en caoutchouc, l'écuelle à mortier ou des improvisations comme la demi balle en caoutchouc, ou même des casseroles ou des boîtes de conserves vides, etc.

Aucune des solutions existantes citées n'apporte une solution appropriée aux nécessités de chantier et d'entretien courant mentionnées plus haut. Les inconvénients majeurs générés par l'utilisation de ces solutions sont: l'insécurité, l'improvisation, voir même la fatigue.

Ainsi, l'utilisation des auges et des petits bols en caoutchouc présente comme principal inconvénient le caractère incommode de leur utilisation. Ni l'une ni l'autre ne sont munis de poignée pour une prise en main commode et sûre. L'auge est lourde et difficilement transportable surtout si elle est remplie de produit préparé. Le bol en caoutchouc n'a aucune stabilité, son fond étant demi sphérique. Par conséquent, la sécurité d'emploi dans des endroits difficiles d'accès, par exemple en haut d'une échelle, manque à ces deux solutions comme d'ailleurs à toutes les autres solutions citées.

Un autre inconvénient dans l'utilisation des auges et des bols en caoutchouc provient de leur forme qui n'est pas compatible avec celle des spatules, des truelles, etc., rendant ainsi difficile l'extraction complète du produit préparé et, conséquemment, produisant le gaspillage du produit.

L'écuelle à mortier selon FR-A-2 619 405 (écuelle qui est d'ailleurs connue, à l'identique avec celle de la demande citée, sous le nom de "canciog", depuis plus d'un siècle, par exemple en Roumanie) est munie d'une poignée et comporte un récipent conique fabriqué en tôle. Le principal et majeur inconvénient dans l'utilisation de l'écuelle à mortier provient de la grande difficulté de son nettoyage. En effet, la quasi totalité des produits employés pour les réparations pratiquées dans le domaine du bâtiment ont un très grand pouvoir d'adhérence sur tout support, donc implicitement sur les parois dures de l'écuelle, d'où la difficulté majeure du nettoyage après utilisation. Nettoyer l'écuelle à mortier, qui est métallique, surtout après la solidification du produit préparé, devient une opération très difficile et dommageable pour l'outil. En effet, pour aboutir à son nettoyage, on frappe la paroi lisse, en tôle, en vue de casser et éliminer ainsi le produit endurci. Mais en frappant cette paroi, on la déforme, provoquant des bosses qui vont favoriser encore plus le dépôt de produit à l'utilisation suivante, rendant de plus en plus difficile l'opération de nettoyage. Après quelques cycles utilisation-nettoyage, les déformations de la paroi sont telles que l'écuelle à mortier devient inutilisable. Donc la durée de vie de l'écuelle à mortier en tôle métallique est très courte. De plus, les déformations de l'écuelle favorise et accélère sa corrosion par la rouille.

Pour les autres moyens cités et qui sont des improvisations: balles en caoutchouc coupées, casseroles, boîtes de conserves vides, etc., il est inutile de s'attarder. Mais l'existence même de ces improvisations montre très clairement la nécessité d'un outil approprié au moins pour les domaines d'utilisation cités plus haut comme exemples.

La présente invention vise à remédier à tous ces inconvénients. Ainsi il est proposé un outil conforme à la revendication 1 en annexe. Cet outil assure une manipulation commode, avec une prise en main sûre et stable, permettant la préparation de produits tels que mortier, plâtre, ciment, enduits, peinture, etc. La forme du récipient est parfaitement compatible avec les formes des spatules, des truelles, etc., permettant donc l'extraction très facile et complète des produits se trouvant dans ledit récipient. Apres l'utilisation, le nettoyage du récipient est très facile, même si cette opération a lieu longtemps après le durcissement du produit: la simple déformation du récipient élastique provoque le décollage et la cassure du produit endurci et donc le nettoyage. L'outil objet de l'invention possède ainsi une très longue durée de vie, favorisée aussi par le fait que la matière élastique n'est pas sujette à la corrosion, surtout par rapport au produits employés dans les domaines déjà cités.

Au repos, le récipient objet de l'invention dispose d'une très bonne assise grâce à son fond plat et grand.

De plus, les inconditionnels de la prise en main du récipient par le fond, semblable à la prise en main d'un petit bol en caoutchouc, seront satisfaits; le fond, du récipient cité objet de l'invention, a été conçu pour améliorer également cette prise en main par l'extérieur grâce au bord. Cette forme ergonomique était difficilement réalisable dans la cas de l'écuelle à mortier, parce que la tôle aurait normalement épousé l'évasement du fond aussi à l'intérieur de l'écuelle, favorisant le dépôt de produit dans la gorge circulaire ainsi crée et rendant encore plus difficile le nettoyage.

Dans le cas de l'objet de l'invention, la forme ergonomique du fond, n'affecte aucunement la forme intérieure du récipient élastique et donc, elle est sans aucune incidence négative sur le nettoyage.

Par ailleurs, la forme ergonomique du fond apporte une résistance accrue au récipient.

Selon d'autres caractéristiques avantageuses de l'invention:
- la bordure (7) de l'ouverture circulaire placée sur la partie supérieure du récipient (1, 8, 19, 24) est finie en angle de préférence cassé (DD).
- l'axe longitudinal de la poignée (2, 10, 23, 25) du récipient (1, 8, 19, 24) est disposé perpendiculairement à l'axe (AA) dudit récipient.
- l'axe longitudinal de la poignée (2, 10, 23, 25) du récipient (1, 8, 19, 24) est disposé parallèlement à l'axe (AA) dudit récipient.
- le poignée (2, 10, 23, 25) est formée d'une seule pièce avec le récipient (1, 8, 19, 24).
- le moyen de rigidification du récipient (1, 8,) est constitué d'un anneau (9, 15), sur lequel est montée une poignée (10, 23), ledit anneau épouse la forme dudit récipient et il est placé autour de ce dernier et à son contact.
- l'anneau (9) est fixe.
- l'anneau (15) est amovible.
- l'anneau (9, 15) a un diamètre tel qu'il peut être placé autour de récipients (8) d'au moins deux calibres différents.
- le récipient (8) possède au moins une gorge périphérique destiné à recevoir l'anneau (9, 15).
- la poignée (23) coopère avec le récipient (8, 19) par l'intermédiaire d'une rotule (21), le blocage de la poignée (21) se faisant à un angle quelconque considéré entre l'axe longitudinal de ladite poignée et l'axe (AA) du récipient (8, 19).
- la pièce d'appui (3, 11) est placée à proximité de la bordure (7) du récipient (1, 8, 19, 24), son bout est orienté vers la base (29) dudit récipient, il est pourvu d'une encoche (4), il se trouve de préférence dans un endroit diamétralement opposé à la poignée (2, 10, 23, 25) et il est formé d'une seule pièce avec ledit récipient.
- la pièce d'appui (3, 11) est placée à proximité de la bordure (7) du récipient (1, 8), son bout est orienté vers la base (29) dudit récipient, est pourvu d'un organe (12) de préférence diamétralement opposé à la poignée (10, 23) et fait partie intégrante de l'anneau (9, 15).
- la pièce d'appui (3, 11) est indépendante et coopère par l'intermédiaire d'un quelconque moyen connu avec le récipient (1, 8, 19, 24)
- le crochet de rangement (5, 13, 17) est situé au-delà de la bordure (7) du récipient (1, 8, 19, 24).
- le crochet de rangement (5, 13, 17) est situé sur la bordure (7) du récipient (1, 8, 19, 24).

Le récipient (1, 8, 19, 24) est de préférence fabriqué en élastomère semi-rigide telle que le caoutchouc, le polyuréthanne, le polyéthylène, etc., lui permettant d'être déformé sans être abîmé pendant l'utilisation ou pendant son nettoyage.

La bordure (7) en angle cassé, du récipient (1, 8, 19, 24) permet l'élimination des restes du produit préparé se trouvant collés sur la spatule ou la truelle utilisées, etc., par leurs simple raclage horizontal contre l'angle de la bordure (7).

Pour appuyer le récipient (1, 8, 19 ou 24), rempli de produit pendant le travail, une pièce d'appui (3 ou 11) est prévue et elle est placée au niveau de la bordure (7) desdits récipients, de préférence sans la dépasser en hauteur, dans un endroit diamétralement opposé à la poignée (2, 10, 23 ou 25).

La pièce d'appui (3) est réalisée dans la même matière que ledites récipients si la pièce d'appui et le récipient sont formés d'une même pièce.

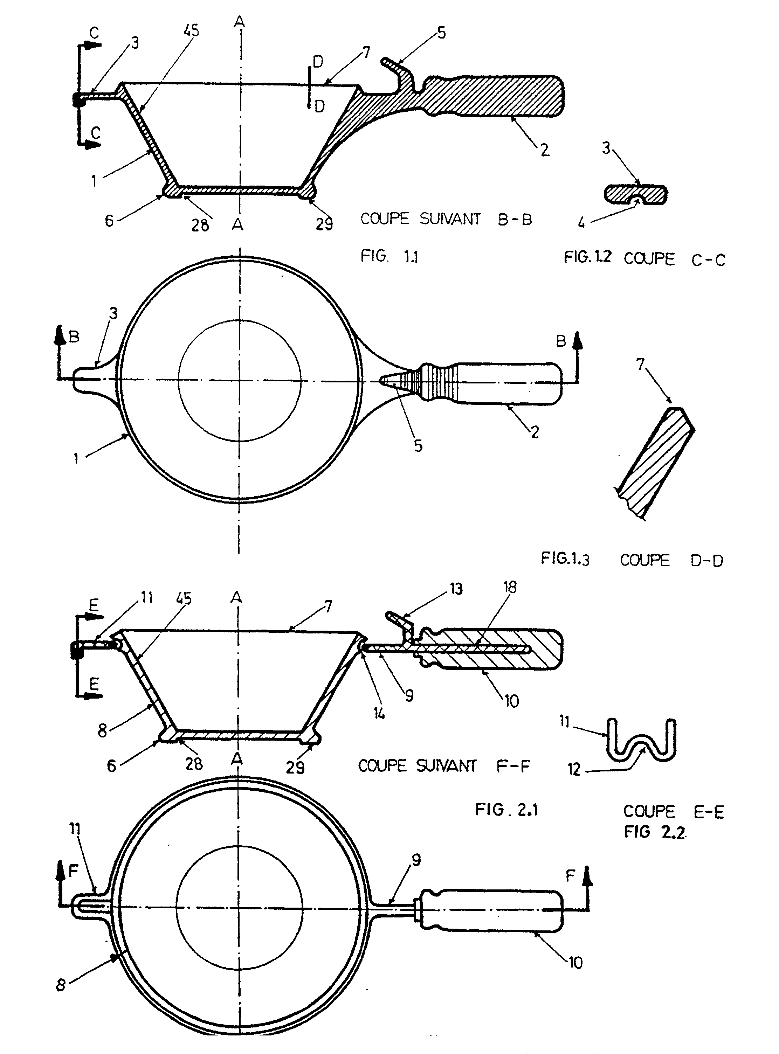

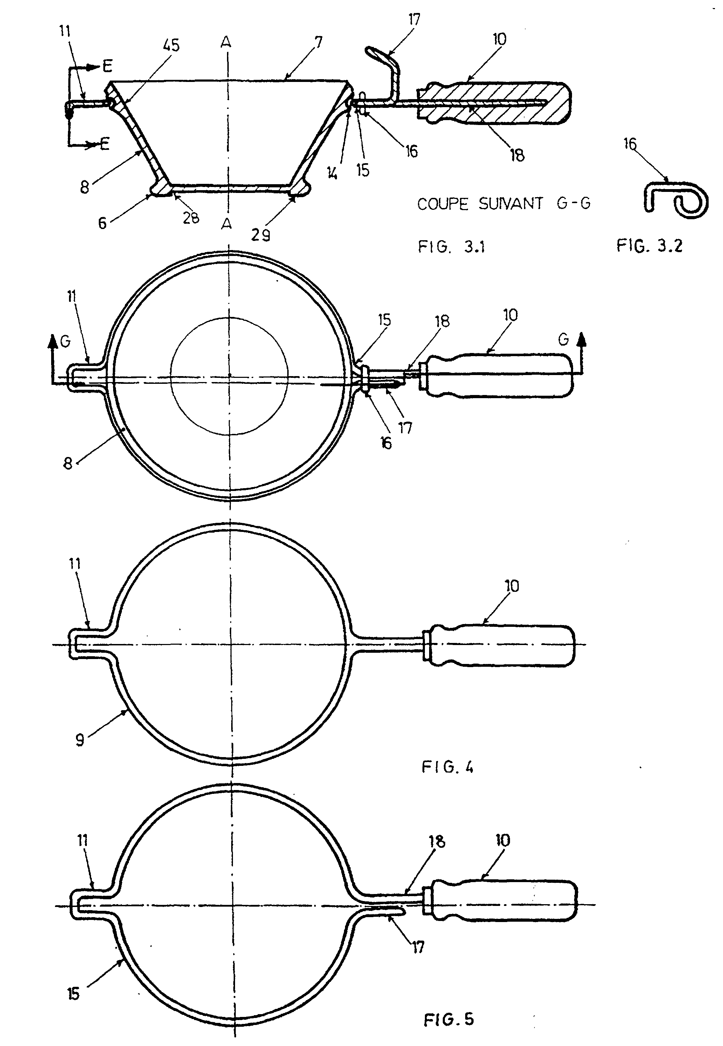

La pièce d'appui (11) fait partie intégrante de l'anneau fixe (9, figure 2), ou de l'anneau amovible (15, figure 3).

Bien entendu, la pièce d'appui (3 ou 11) peut aussi constituer un élément indépendant qui va coopérer avec le récipient (1, 8, 19 ou 24) par l'intermédiaire d'un quelconque moyen de fixation connu.

Les pièces d'appui (3 ou 11) sont pourvues, au bout, d'une encoche (4) ou respectivement de l'organe (12), à fonction antidérapante pour le récipient pendant son utilisation. Par exemple, on peut appuyer l'encoche (4) ou l'organe (12), à cheval sur un clou fixe dans le mur à l'endroit de l'utilisation du récipient élastique.

Pour ranger le récipient vide aussi bien au lieu de travail, que par exemple, dans un atelier ou dans un dépôt, un crochet de rangement (5, 13 ou 17) est prévu à proximité de la poignée. Pour la même fonction de rangement, la poignée (2, 10, 23, 25), comme aussi la pièce d'appui (3), peuvent présenter un orifice, non représenté, dans son extrémité opposée par rapport au récipient.

Le crochet de rangement (5), est réalisé dans la même matière que le récipient (1, 8, 19 ou 24), si le crochet et le récipient sont formés d'une même pièce.

Le crochet (13 ou 17), font partie intégrante de l'anneau fixe (9), ou respectivement de l'anneau amovible (15).

Bien entendu, le crochet (5, 13 ou 17), peut constituer une pièce séparée qui, par un quelconque moyen connu de fixation, va coopérer avec le récipient (1, 8, 19 ou 24).

Le crochet de rangement (5, 13 ou 17), peut faire partie intégrante du poignée (2, 10, 23 ou 25).

La paroi intérieure (45) du récipient (1, 8, 19, 24) est lisse, de forme tronconique avec le fond intérieur plat.

La base extérieure (29), du récipient (1, 8, 19, 24), est pourvue d'un bord (6) facilitant sa préhension d'une seule main.

Les accessoires (30, 32, 34, 36, 38, 40) du récipient (1, 8, 19, 24) constituent des pièces adaptables à des endroits librement choisis sur la bordure (7) permettant, par le renversement du récipient (1, 8, 19, 24), l'étalement commode et précis du produit préalablement préparé à l'intérieur dudit récipient.

Des récipients de capacités plus grandes que le récipient (8), pourront être associes à l'anneau amovible (15). Dans ce cas, la gorge (14), permettent le positionnement de l'anneau (15), se trouvera à l'endroit où la conicité du récipient aura le même diamètre extérieur que le diamètre intérieur de l'anneau amovible (15), plus au moins haut, entre le petit et le grand diamètre dudit récipient. Ainsi un seul anneau (15) permettera de coopérer avec plusieurs calibres de récipients.

L'invention sera mieux comprise par la description détaillée ci-après, faite en référence aux dessins annexés.

Bien entendu, la description et les dessins ne sont donnés ici qu'à titre d'exemple indicatif et non limitatif.

La figure 1.1, est une vue de la coupe BB et du plan du récipient élastique 1 selon une manière de réalisation, où ledit récipient élastique 1, fait corps commun avec la poignée 2, avec la pièce d'appui 3 qui comporte l'encoche 4 et avec le crochet de rangement 5, tous les quatre éléments étant formés d'une seule pièce avec le bord ergonomique 6 et la bordure 7 à angle cassé.

La figure 1.2, est une vue du détail selon la coupe CC qui montre l'emplacement de l'encoche 4 sur la pièce d'appui 3.

La figure 1.3, est une vue du détail selon la coupe DD qui montre l'angle cassé de la bordure 7 du récipient 1, 8, 19, 24.

La figure 2.1, est une vue de la coupe FF et du plan du récipient élastique 8, selon une solution de fabrication où l'anneau fixe 9, la poignée 10, la pièce d'appui 11 pourvue de l'organe 12 ainsi que le crochet 13, font partie intégrante du dit anneau fixe 9, sont montés de manière non démontable avec le dit récipient élastique 8, par l'intermédiaire de la gorge de positionnement 14.

La figure 2.2, est une vue du détail selon la coupe EE qui montre l'emplacement et la forme de l'organe 12 sur l'anneau 9 ou respectivement 15.

La figure 3.1, est une vue de la coupe GG et du plan du récipient élastique 8, selon une solution où l'anneau amovible 15 est serré ou desserré autour du dit récipient élastique 8, serrage bloqué ou débloqué par la pièce de sécurité 16. L'anneau amovible 15 est positionné sur le récipient 8 par l'intermédiaire de la gorge 14, il est associé à la pièce d'appui 11 pourvue d'un organe 12, au crochet de rangement 17 et au poignée 10 par l'intermédiaire de la tige 18.

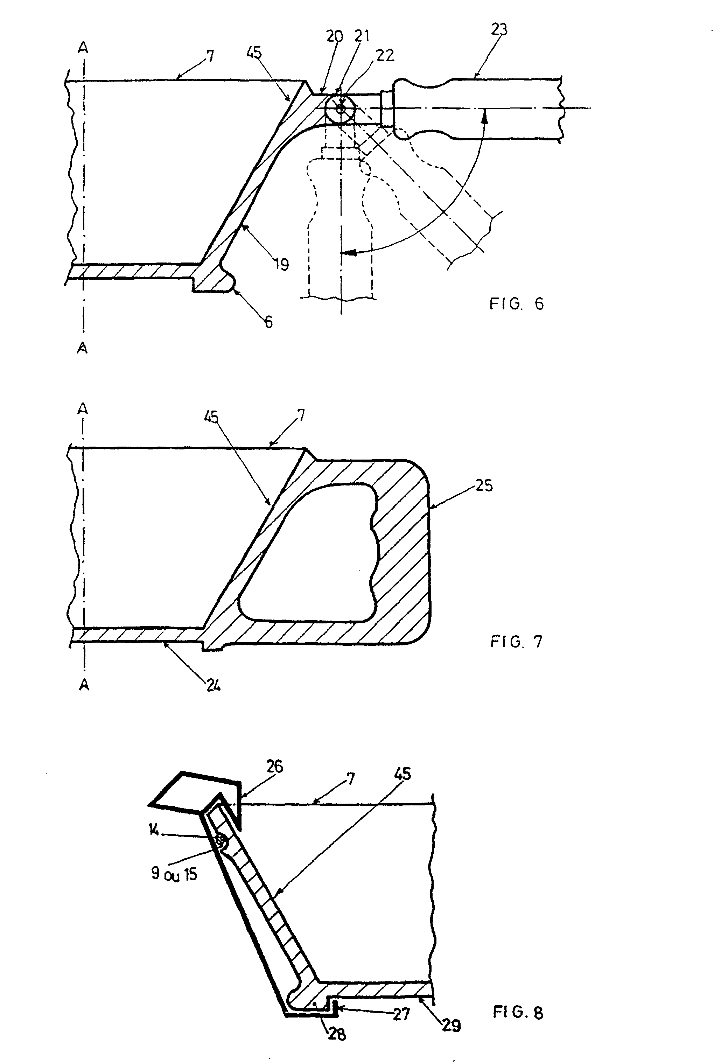

La figure 4 est une vue de l'anneau fixe 9, du poignée 10 et de la pièce d'appui 11.

La figure 5 est une vue du plan de l'anneau amovible 15, de la poignée 10, de la pièce d'appui 11 du crochet de rangement 17 et de la tige 18.

La figure 6 est une vue d'un détail selon une solution où le récipient élastique 19 a une partie fixe 20, sur laquelle est monté une rotule 21, qui coopère avec le vis de fixation 22 de la poignée à angle de fixation variable 23. La partie fixe 20 et la rotule 21, sont formées d'une seule pièce avec le dit récipient élastique 19.

L'ensemble: rotule 21, vis de fixation 22 et poignée (23) à angle de fixation variable, par l'intermédiaire d'un quelconque moyen connu de fixation, peut coopérer aussi avec l'anneau 9 ou 15.

La figure 7 est une coupe du récipient 24 où la poignée 25 est fermée comme une anse.

Pour accroître encore l'utilité du récipient élastique 1, 8, 19, 24, des accessoires peuvent être prévus. Ces accessoires sont, par exemple non limitatif, des becs déversoirs.

Tous les accessoires peuvent être montées sur lés récipients 1, 8, 19, 24, de la même manière.

La figure 8 est une vue du récipient 1 , 8, 19, 24, sur lequel est monté un accessoire. Chaque bec déversoir est monté avec les griffes 26 sur la bordure 7 du récipient élastique et par les griffes 27 au bord inférieur 28 de la base 29 du récipient élastique 1, 8, 19, 24.

Pour faciliter le montage d'un accessoire, le récipient élastique sera déformé légèrement et momentanément.

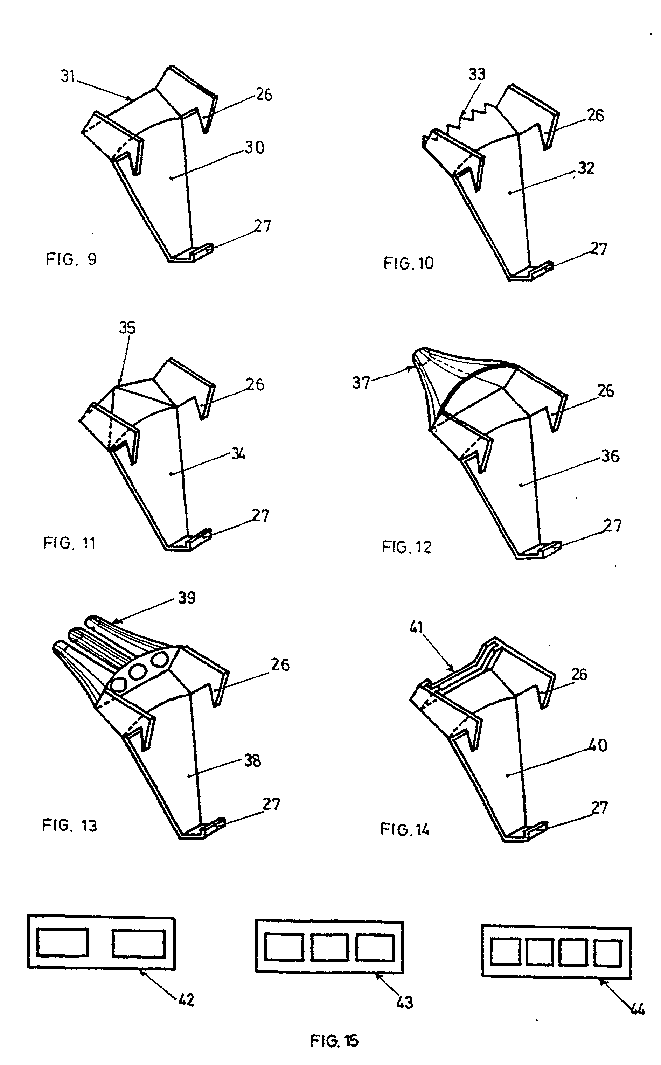

La figure 9 est une vue du bec déversoir 30 démontable, horizontal, se terminant avec une lèvre droite 31. Cet accessoire, monté sur la bordure 7 du récipient élastique 1, 8, 19, 24, trouvera son utilité, par exemple, dans l'étalement du mortier sur les briques en vue de monter un mur.

La figure 10 est une vue du bec déversoir démontable 32, horizontal, se terminant en dents de scie 33. Cet accessoire monté sur la bordure du récipient 1, 8, 19, 24, trouvera son utilité, par exemple, dans l'étalement de la colle pour la pose de carreaux de faïence ou de grès, de lamelles de parquet à coller, de dalles de moquette, etc.

La figure 11 est une vue du bec déversoir démontable 34 se terminant par un canal pointu 35, qui permet de contrôler et de diriger avec précision le versement du produit contenu dans le récipient élastique 1, 8, 19, 24. Cet accessoire trouvera son utilité, par exemple, pour couler le produit en vue de réaliser des joints entre les carreaux de faïence, de grès, etc.

La figure 12 est une vue du bec déversoir démontable 36 se terminant en entonnoir mono tube 37. Voir pour exemple, l'utilité présentée à la description de la figure 11.

La figure 13 est une vue du bec déversoir démontable 38 se terminant en entonnoir pluri-tube 39. Voir pour exemple, l'utilité présentée à la description de la figure 10.

La figure 14 est une vue du bec déversoir démontable 40 prévu d'un support 41, pour des grilles 42, 43 et 44 qui permettent de choisir l'écartement entre les "boudins" du produit étalé. Voir pour exemple, l'utilité présenté à la description de la figure 10.

La figure 15 présente des exemples de grilles 42, 43 et 44 pouvant être montées sur le support 41 de la figure 14.

Une application de l'objet de l'invention, comme nous l'avons déjà dit plus haut, est son utilisation pour la préparation du, par exemple: mortier, plâtre, enduit, etc., dans le but de l'avoir à porté de main en vue de reboucher des tranchées d'installations électriques, sanitaires, etc., ou reboucher fissures ou imperfections des murs avant de les enduire, ou encore, préparer l'enduit pour enduire un mur avant de commencer à le peindre, etc.

Une autre application intéressante de l'objet de l'invention est son utilisation, avec ou sans accessoires, pour prélever du mortier dans une auge ou dans un bac de préparation et l'étaler sur les briques lors du montage d'un mur.

Une autre application de l'objet de l'invention est son utilisation pour prélever de l'enduit dans une auge ou bac de préparation afin de le projeter contre le mur à enduire.

De même on peut utiliser l'objet de l'invention avec ses accessoires pour étaler la colle en vue d'assembler les carreaux de plâtre pour monter des cloisons.

Etant donné qu'il apporte des solutions pratiques, commodes et sûres dans des domaines d'utilisation très divers, l'objet de l'invention trouvera son utilité, aussi bien dans les mains du professionnel du bâtiment, que dans celles du bricoleur, partout où il est nécessaire de préparer du produit, de manipuler et maintenir ce produit préparé à porté de main, pour un emploi facile, commode et en toute sécurité, permettant un nettoyage très facile.

Bien entendu, l'objet de l'invention pourra également trouver son utilité dans d'autres corps de métier du bâtiment et d'autres domaines du bricolage que ceux déjà cités et même dans d'autres domaines d'activités. Par exemple le domaine alimentaire, pour transvaser ou doser des grains, des poudres des liquides, etc.

## Revendications

1. Outil pour la préparation d'un produit visqueux et constitué d'un récipient (1, 8, 19, 24) muni d'une poignée (2, 10, 23, 25), **caractérisé en ce que** ledit récipient est en élastomère, de forme tronconique, associé à un ou plusieurs moyens de rigidification (9, 15), qu'il a un fond (29) dont l'extérieur est pourvu d'un bord (6) facilitant sa préhension manuelle et qu'il est associé avantageusement à des moyens (30, 32, 34, 36, 38, 40) assurant le contrôle de l'écoulement du produit visqueux hors du récipient.

2. Outil selon la revendication 1, **caractérisé en ce que** la bordure (7) de l'ouverture circulaire placée sur la partie supérieure du récipient (1, 8, 19, 24) est finie en angle de préférence cassé.

3. Outil selon la revendication 1, **caractérisé en ce que** l'axe longitudinal de la poignée (2, 10, 23, 25) du récipient (1, 8, 19, 24) est disposé perpendiculairement à l'axe dudit récipient.

4. Outil selon la revendication 1, **caractérisé en ce que** l'axe longitudinal de la poignée (2, 10, 23, 25) du récipient (1, 8, 19, 24) est disposé parallèlement à l'axe dudit récipient.

5. Outil selon la revendication 1, **caractérisé en ce que** la poignée (2, 10, 23, 25) est formée d'une seule pièce avec le récipient (1, 8, 19, 24).

6. Outil selon la revendication 1, **caractérisé en ce que** le moyen de rigidification du récipient (1, 8) est constitué d'un anneau (9, 15) sur lequel est montée la poignée (10, 23), ledit anneau épousant la forme dudit récipient et étant placé autour de ce dernier et à son contact.

7. Outil selon la revendication 6, **caractérisé en ce que** l'anneau (9) est fixe.

8. Outil selon la revendication 6, **caractérisé en ce que** l'anneau (15) est amovible.

9. Outil selon la revendication 6, **caractérisé en ce que** l'anneau (9, 15) a un diamètre tel qu'il peut être placé autour de récipients (8) de calibres différents.

10. Outil selon l'une quelconque des revendications 6 à 9, **caractérisé en ce que** le récipient (8) possède au moins une gorge périphérique (14) destinée à recevoir l'anneau (9, 15).

11. Outil selon la revendication 1, **caractérisé en ce que** la poignée (23) coopère avec le récipient (8, 19) par l'intermédiaire d'une rotule (21), le blocage de la poignée (23) se faisant à un angle quelconque considéré entre l'axe longitudinal de ladite poignée et l'axe du récipient (8, 19).

12. Outil selon la revendication 1, **caractérisé en ce qu'**une pièce d'appui (3, 11) est placée à proximité de la bordure (7) du récipient (1, 8, 19, 24), son bout étant orienté vers la base (29) dudit récipient et étant pourvu d'une encoche (4), de préférence diamétralement opposée à la poignée (2, 10, 23, 25) et étant formé d'une seule pièce avec ledit récipient.

13. Outil selon l'une quelconque des revendications 6 à 9, **caractérisé en ce qu'**une pièce d'appui (3, 11) est placée à proximité de la bordure (7) du récipient (1, 8), son bout étant orienté vers la base (29) dudit récipient, et étant pourvu d'un organe (12) à fonction antidérapante de préférence diamétralement opposé à la poignée (10, 23) et faisant partie intégrante de l'anneau (9, 15).

14. Outil selon la revendication 1, **caractérisé en ce qu'**une pièce d'appui (3, 11) indépendante coopère par l'intermédiaire d'un quelconque moyen connu avec le récipient (1, 8, 19, 24).

15. Outil selon la revendication 1, **caractérisé en ce qu'**un crochet de rangement (5, 13, 17) est situé au-delà de la bordure (7) du récipient (1, 8, 19, 24).

16. Outil selon la revendication 1, **caractérisé en ce qu'**un crochet de rangement (5, 13, 17) est situé sur la bordure (7) du récipient (1, 8, 19, 24).

## Patentansprüche

1. Werkzeug für die Vorbereitung eines zähflüssigen Produktes und aus einem Gefäß (1,8,19,24) gebildet, welches mit einem Griff (2,10,23,25) ausgestattet ist, charakterisiert dadurch dass das besagte Gefäß aus elastischer Masse (Elastomer) ist, kegelstumpfförmig und verbunden mit einem oder mehreren Festigungsmittel (9,15) ist, ebenfalls, dadurch dass es ein Boden (29) hat, dessen Außenseite mit einem Rand (6), die Handergreifung erleichternd, ausgestattet ist, und dadurch dass es vorteilhaft an Mitteln (30,32,34,36,38,40), welche die Kontrolle des Abflusses nach außen des zähflüssigen Produktes versichern, verbunden ist.

2. Werkzeug gemäß der Forderung 1, charakterisiert dadurch dass der Rand (7) der Kreisöffnung, die auf den höheren Teil des Gefäßes (1,8,19,24) gelegt ist, in vorzugsweise gebrochenem Winkel beendet ist.

3. Werkzeug gemäß der Forderung 1, charakterisiert dadurch dass die Längsachse des Griffs (2,10,23,25) vom Gefäß (1,8,19,24) senkrecht an der Achse des besagten Gefäßes aufgerichtet ist.

4. Werkzeug gemäß der Forderung 1, charakterisiert dadurch dass die Längsachse des Griffs (2,10,23,25) vom Gefäß (1,8,19,24) parallel zur Achse des Gefäßes aufgerichtet ist.

5. Werkzeug gemäß der Forderung 1, charakterisiert dadurch dass der Griff (2,10,23,25) aus einem einzigen Stück mit dem Gefäß (1,8,19,24) gebildet ist.

6. Werkzeug gemäß der Forderung 1, charakterisiert dadurch dass der Festigungsmittel des Gefäßes (1,8) aus einem Ring besteht (9,15) auf dem der Griff (10,23) aufgerichtet ist, besagter Ring, der die Form des Gefäßes annimmt und der ringsum den letzteren und an seinem Kontakt gelegt ist.

7. Werkzeug gemäß der Forderung 6, charakterisiert dadurch dass der Ring (9) fest ist.

8. Werkzeug gemäß der Forderung 6, charakterisiert dadurch dass der Ring (15) abnehmbar ist.

9. Werkzeug gemäß der Forderung 6, charakterisiert dadurch dass der Ring (9,15) einen solchen Durchmesser hat, dass er ringsum Gefäße (8) mit einem Unterschied von wenigstens zwei Kalibern, gesetzt werden kann.

10. Werkzeug gemäß irgendeiner Forderung 6 bis 9, charakterisiert dadurch dass das Gefäß (8) wenigstens eine peripherische Kehle (14), die den Ring (9,15) erhalten soll, besitzt.

11. Werkzeug gemäß der Forderung 1, charakterisiert dadurch dass der Griff (23) mit dem Gefäß (8, 19) über eine Kniescheibe (21) mitarbeitet, das Blockieren des Griffs (23) erfolgt unter irgendeinem Winkel, der zwischen der Längsachse des besagten Griffs und der Achse des Gefäßes (8,19) angenommen ist.

12. Werkzeug gemäß der Forderung 1, charakterisiert dadurch dass ein flankierendes Stück (3,11) in der Nähe des Randes (7) des Gefäßes (1,8,19,24) gesetzt ist, sein Ende ist auf die Basis (29) des besagten Gefäßes ausgerichtet und mit einer Nut (4) ausgestattet, es ist vorzugsweise, dem Griff (2,10,23,25) diametral entgegengesetzt und aus einem einzigen Stück mit besagtem Gefäß gebildet.

13. Werkzeug gemäß irgendeiner Forderung 6 bis 9, charakterisiert dadurch dass ein flankierendes Stück (3, 11) in der Nähe des Randes (7) des Gefäßes (1,8) gelegt ist, sein Ende ist auf die Basis (29) des Gefäßes ausgerichtet und mit einem Organ (12), welcher rutschfeste Funktion hat, ausgestattet, es ist vorzugsweise, dem Griff (10,23) diametral entgegengesetzt und wesentlicher Bestandteil des Rings (9,15).

14. Werkzeug gemäß der Forderung 1, charakterisiert dadurch dass ein unabhängiges flankierendes Stück (3,11) über irgendein bekanntes Mittel mit dem Gefäß (1,8,19,24) mitarbeitet.

15. Werkzeug gemäß der Forderung 1, charakterisiert dadurch dass ein Ordnenshaken (5,13,17) hinaus über den Rand (7) des Gefäßes (1,8,19,24) aufgerichtet ist.

16. Werkzeug gemäß der Forderung 1, charakterisiert dadurch dass ein Ordnenshaken (5,13,17) auf dem Rand (7) des Gefäßes (1,8,19,24) aufgerichtet ist.

## Claims

1. Tool for preparing a viscous product and formed of a container (1, 8, 19, 24) equipped with a handle (2, 10, 23, 25), **characterised in that** it is a container made of elastomer, truncated shaped associated with one or several means of making it rigid (9, 15), that it has a bottom (29) the outer part of which is equipped with a border (6) easing its handling and it is profitable associated with means (30, 32, 34, 36, 38, 40) allowign a safe control when pouring the viscous product out of the container.

2. Tool corresponding to claim 1, **characterised in that** the rim (7) of the circular opening situated on the upper part of the container (1, 8, 19, 24) is finished with an angle preferably bevelled.

3. Tool corresponding to claim 1, **characterised in that** the longitudinal axis of the handle (2, 10, 23, 25) of the container (1, 8, 19, 24) is perpendicular to the axis of the container itself.

4. Tool corresponding to claim 1, **characterised in that** the longitudinal axis of the handle (2, 10, 23, 25) of the container (1, 8, 19, 24) is parallel to the axis of the container itself.

5. Tool corresponding to claim 1, **characterised in that** the handle here (2, 10, 23, 25) is one with the container (1, 8, 19, 24).

6. Tool corresponding to claim 1, **characterised in that** the means of making the container (1, 8) rigid is a ring (9, 15) on which the handle is set (10, 23) that ring fits the shape of the container and is placed around it in contact with it.

7. Tool corresponding to claim 6, **characterised in that** the ring (9) is fixed.

8. Tool corresponding to claim 6, **characterised in that** the ring (15) is removable.

9. Tool corresponding to claim 6, **characterised in that** the diameter of the ring (9, 15) is such as it can be placed around containers (8) of two different sizes at least.

10. Tool corresponding to any claim from 6 to 9, **characterised in that** the container (8) has at least one peripheral groove (14) in which to fix the ring (9, 15).

11. Tool corresponding to claim 1, **characterised in that** the handle (23) co-operates with the container (8, 19) by means of a knee joint (21), the blocking of the handle (23) is done at any angle chosen made by the longitudinal axis of the handle (23) and the axis of the container (8, 19).

12. Tool corresponding to claim 1, **characterised in that** a leaning device (3, 11) is placed near the rim (7) of the container (1, 8, 19, 24) its end being orientated towards the base (29) of the container, and equipped with a nick (4) preferably placed diametrically opposite the handle (2, 10, 23, 25) and being one with the said container.

13. Tool corresponding to any claim from 6 to 9, **characterised in that** a leaning device (3, 11) is placed near the rim (7) of the container (1, 8) its end being orientated towards the base (29) of that container, and is equipped with a non-skid component (12) preferably situated diametrically opposite the handle (10, 23), and it is an integral part of the ring (9, 15).

14. Tool corresponding to claim 1, **characterised in that** an independent leaning device (3, 11) co-operates by any usual means, with the container (1, 8, 19, 24).

15. Tool corresponding to claim 1, **characterised in that** a storage hook (5, 13, 17) is placed beyond the rim (7) of the container (1, 8, 19, 24).

16. Tool corresponding to claim 1, **characterised in that** a storage hook (5, 13, 17) is placed on the rim (7) of the container (1, 8, 19, 24).
